## Europäisches Patentamt

## European Patent Office

## Office européen des brevets

(11) Veröffentlichungsnummer: **0 317 515**
**A1**

# (12) EUROPÄISCHE PATENTANMELDUNG

(21) Anmeldenummer: 88810786.9

(22) Anmeldetag: 16.11.88

(51) Int. Cl.4: **F 01 N 3/02**

(30) Priorität: 18.11.87 CH 4505/87
23.12.87 CH 5050/87

(43) Veröffentlichungstag der Anmeldung:
24.05.89 Patentblatt 89/21

(84) Benannte Vertragsstaaten:
AT BE CH DE ES FR GB GR IT LI LU NL SE

(71) Anmelder: SCHWEIZERISCHE ALUMINIUM AG
CH-3965 Chippis (CH)

(72) Erfinder: Gabathuler, Jean-Pierre
Friedhofweg 2D
CH-8226 Schleitheim (CH)

Mizrah, Tiberiu
Hohlenbaumstrasse 90
CH-8200 Schaffhausen (CH)

Doll, Manfred
Perglasstrasse 34
D-6730 Neustadt 17 (DE)

Bressler, Harald
Am Schlittweg 15
D-6721 Westheim (DE)

(54) Filter zur Reinigung der Abgase von Dieselmotoren.

(57) Bei einem Filter aus hohlzylinderförmiger offenporiger Schaumkeramik und einem Boden aus für Gase undurchlässigem Material als Einsatz in einen Filtertopf zur Reinigung der Abgase von Dieselmotoren, bei dem die Abgase den filterwirksamen Teil im wesentlichen quer zur Zylinderachse durchströmen, kann ein grösseres Schaumkeramikteil, wie es beispielsweise als Abgasfilter für einen Dieselmotor für einen Lastkraftwagen oder einen Bus zur Personenbeförderung Anwendung findet, nur unter erhöhten Anforderungen aus einem Stück gefertigt werden, weil die notwendige Masshaltigkeit erhöhte Anforderungen nötig macht und damit die Wirtschaftlichkeit des Einsatzes der Schaumkeramik stark beeinträchtigt wird. Zudem steigt der Gegendruck erheblich an.

Bei einem Filter (10) der oben genannten Art, das aus mindestens 2 axial angeordneten Schaumkeramikzylinderelementen (11), zwischen denen sich eine Scheibe (12) aus für Gase undurchlässigem Material mit wenigstens etwa gleichem Durchmesser wie die Schaumkeramikzylinderelemente (11) und mit mindestens einer Oeffnung (13) im Schaumkeramikzylinderfreien Bereich befindet, besteht, werden diese Nachteile vermieden.

Fig. 1

Bundesdruckerei Berlin

**Beschreibung**

Die vorliegende Erfindung betrifft ein Filter aus hohlzylinderförmiger offenporiger Schaumkeramik und einem Boden aus für Gase undurchlässigem Material zur Reinigung der Abgase von Dieselmotoren, bei dem die Abgase den filterwirksamen Teil im wesentlichen quer zur Zylinderachse durchströmen, als Einsatz in einem Filtertopf.

Ein Filter der genannten Art ist aus der EP-A-0 216 729 bekannt.

Die Russbestandteile der Abgase von Dieselmotoren können grundsätzlich auf zwei Wegen verringert werden: Durch Optimierung der Gemischaufbereitung und des Verbrennungsablaufs im Motor und durch Einbau von Filtern in den Abgasstrom. Je nach Ausbildung des Filters werden üblicherweise Russabscheidungsgrade von 50-90% erzielt.

Das wirksame Filtervolumen kann jedoch nicht beliebig vergrössert werden, um eine optimale Russabscheidung zu erreichen, denn das Filter wirkt als Widerstand, der einen Gegendruck gegenüber dem Abgas erzeugt. Der Gegendruck darf nicht zu hoch sein, da sonst die Motorleistung herabgesetzt und der Treibstoffverbrauch erhöht wird. Beispielsweise sollte bei den Kraftwagen zum Strassenverkehr, insbesondere Personenkraftwagen, eingesetzten Dieselmotoren, die mit Abgasfiltern ausgerüstet sind, der Gegendruck bei maximal 0,2 bar liegen.

Auf Grund der Grösse der Dieselmotoren für Lastkraftwagen und Busse zur Personenbeförderung werden besonders grosse Abgasfilter benötigt. Es stellt sich dabei das Problem, dass sowohl grössere Schaumkeramikteile nur unter erhöhten Anforderungen aus einem Stück gefertigt werden können, weil die notwendige Masshaltigkeit erhöhte Aufwendungen nötig macht und damit die Wirtschaftlichkeit des Einsatzes der Schaumkeramik stark beeinträchtigt wird, als auch der Gegendruck wie bei üblichen Konstruktionsmassnahmen, wie sie beispielsweise aus der US-PS 4 264 346 hervorgehen, bei denen die Abgase ein zylindrisches Schaumkeramikstück stirnseitig beaufschlagen und achsparallel (axial) durchströmen, erheblich ansteigt.

Angesichts dieser Gegebenheiten haben sich die Erfinder die Aufgabe gesetzt, ein Filter der eingangs genannten Art zu schaffen, welches sowohl eine einfache Herstellung ermöglicht als auch einen niedrigen Gegendruck bewirkt.

Erfindungsgemäss wird die gestellte Aufgabe durch ein Filter gelöst, welches sich nach dem Wortlaut des Anspruchs 1 auszeichnet.

Vorteilhafte Weiterbildungen des erfindungsgemässen Filters sind durch die Merkmale der Ansprüche 2 bis 14 gekennzeichnet.

Das erfindungsgemässe Filter hat den Vorteil, dass mehrere kleine Schaumkeramikzylinderelemente verwendet werden, welche massgenau und auf wirtschaftliche Weise hergestellt werden können, und auf Grund der von den Abgasen angeströmten grossen Filterfläche wegen der damit bewirkten kleinen linearen Gasgeschwindigkeit eine hohe Filtereffizienz erfolgt. Ferner kann durch die individuelle Ausgestaltung der einzelnen Scheiben oder Schaumkeramikzylinder die Oeffnungsquerschnittsfläche derselben variiert und damit der Abgasfluss für jedes Filterelement eingestellt werden, sodass über den gesamten Filter hinweg eine homogene Reinigungswirksamkeit der Abgase erzielt wird.

Die lineare Geschwindigkeit des Abgases bei dem erfindungsgemässen Filter liegt unter 10 m/s, der Gegendruck unter 0.1 bar. Bei optimaler Anpassung der Oeffnungsquerschnittsflächen der Scheiben und der Porengrösse der Schaumkeramikzylinderelemente wurde sogar eine lineare Geschwindigkeit der Abgase von kleiner als 3 m/s gemessen.

Weitere Vorteile, Merkmale und Einzelheiten des erfindungsgemässen Filters ergeben sich aus der Zeichnung; diese zeigt schematisch in

Fig.1 einen Längsschnitt durch einen Filtertopf mit erfindungsgemässem Filter,

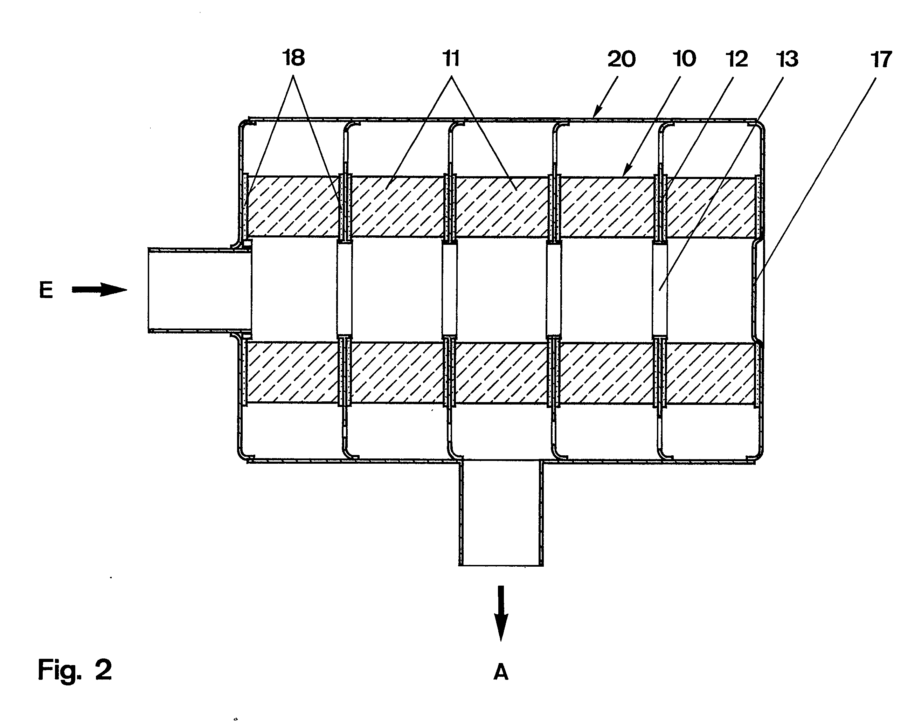

Fig.2 einen Längsschnitt durch einen anderen Filtertopf mit erfindungsgemässem Filter,

Fig.3 zwei Grundrisse von Scheiben und in

Fig.4 im Längsschnitt vier weitere Ausgestaltungen von Filtertöpfen mit dem erfindungsgemässen Filter.

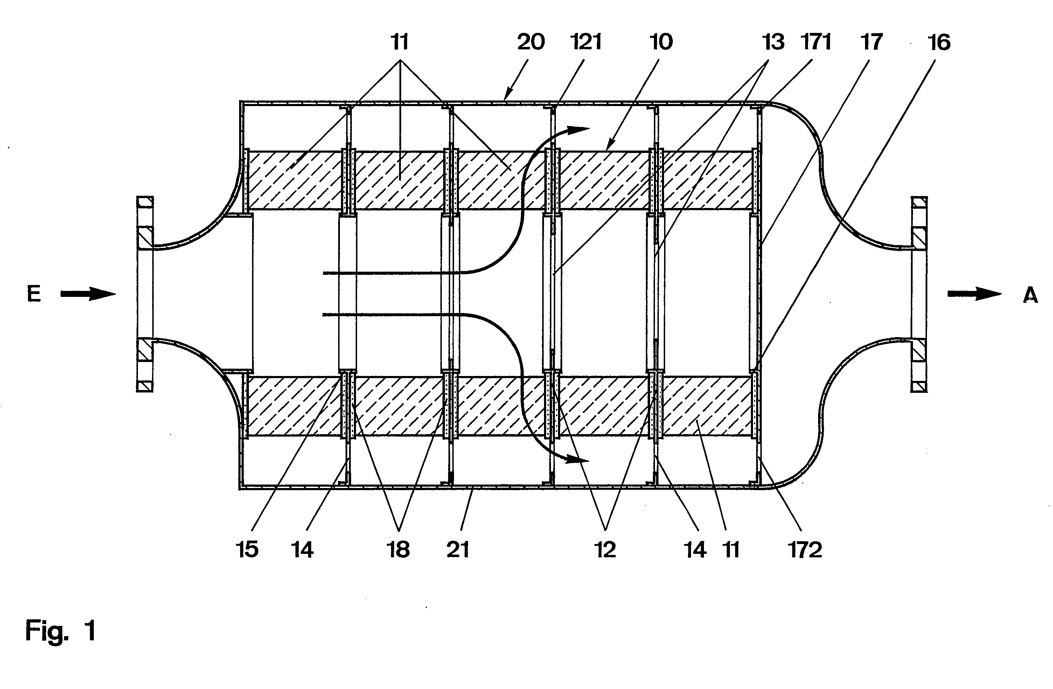

Der Filter 10 besteht aus einem System von mehreren, relativ kurzen Schaumkeramikzylinderelementen 11 die axial angeordnet sind. Die Elemente 11 werden im wesentlichen in axialer Richtung durch Pressung gehalten. Zwischen den Elementen 11 befindet sich jeweils eine Scheibe 12 mit Oeffnung 13 und am Ende ein Boden 17. Die Presskraft kann ausser durch mechanische Mittel, vorteilhaft durch Packungen 18, welche jeweils die Scheiben 12 flankieren, bewirkt werden. Die Packungen 18 bestehen vorteilhaft aus hitzebeständigem keramischen Material, das elastisch ist oder sich bei erhöhter Temperatur, wie sie beispielsweise durch den Gebrauch des Filters auftritt, ausdehnt, - daher Schwellmatten oder Blähmatten genannt -, wodurch die Pressungskraft erzeugt wird. Aber auch Packungen 18 aus Drahtgeflecht oder ähnlichem Material, das eine Pressung bewirkt, sind geeignet. Durch die Oeffnungen 13 wird das Einströmen der Abgase in Pfeilrichtung A in das gesamte Filter ermöglicht. Entsprechend der in Figur 1 schwächer gezeichneten Pfeile durchströmt das Abgas quer zur Längsrichtung des Filters die einzelnen Schaumkeramikzylinderelemente 11 und tritt im peripheren Bereich zwischen den Elementen 11 und der Innenwand 21 des Filtertopfs 20 aus, wo sich die Scheiben 12 mindestens teilweise auf der Innenwandung 21 des Filtertopfes 20 abstützen und mindestens eine Oeffnung 14 aufweisen, durch die die gereinigten Abgase strömen und nach Passieren des in diesem Bereich analog ausgestalteten plattenförmigen Bodens 17 mit mindestens einer Oeffnung 172 am Ausgang E des Filtertopfes 20 diesen verlassen.

Die Oeffnungen 13 bzw. die Querschnittsfläche/n der Scheibe 12 kann/können vorzugsweise derart variiert werden, dass die Abgasströmung in jedem einzelnen Schaumkeramikzylinderelement etwa gleich ist. Diese Angleichung kann noch zusätzlich dadurch gefördert werden, dass man die Oeffnung/en 14 bzw. die Querschnittsflächen $F_a$ ebenfalls entsprechend anpasst und/oder die Zahl der Poren pro linearer Länge der einzelnen Schaumkeramikzylinderelemente variiert.

Zur Zentrierung und Halterung der einzelnen Schaumkeramikzylinderelemente 11 weisen die Scheiben 12 im Bereich der Oeffnung/en 13 quer zur Scheibenebene angeordnete rohrförmige Kragen 15 und der Boden 17 quer zur Bodenebene angeordnete rohrförmige Kragenelemente 16 auf. Die Scheibe besteht vorteilhaft aus Metall, vorzugsweise aus Edelstahl.

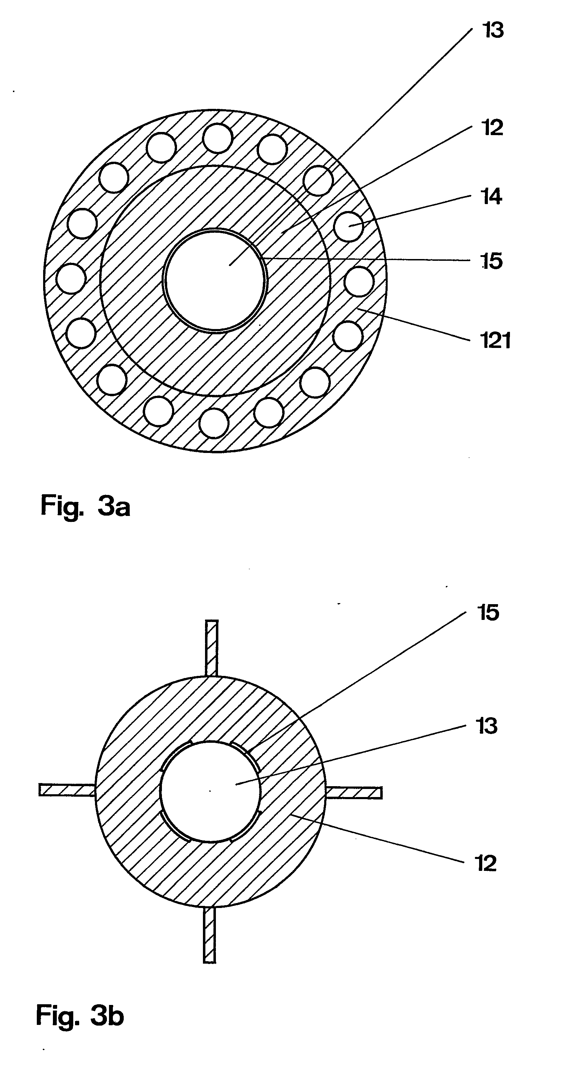

Figur 3 zeigt zwei Möglichkeiten der Ausgestaltung der Scheiben 12. In analoger Weise kann die Ausgestaltung des Bodens erfolgen, wo selbstverständlich dann die Oeffnung 13 nicht vorhanden ist.

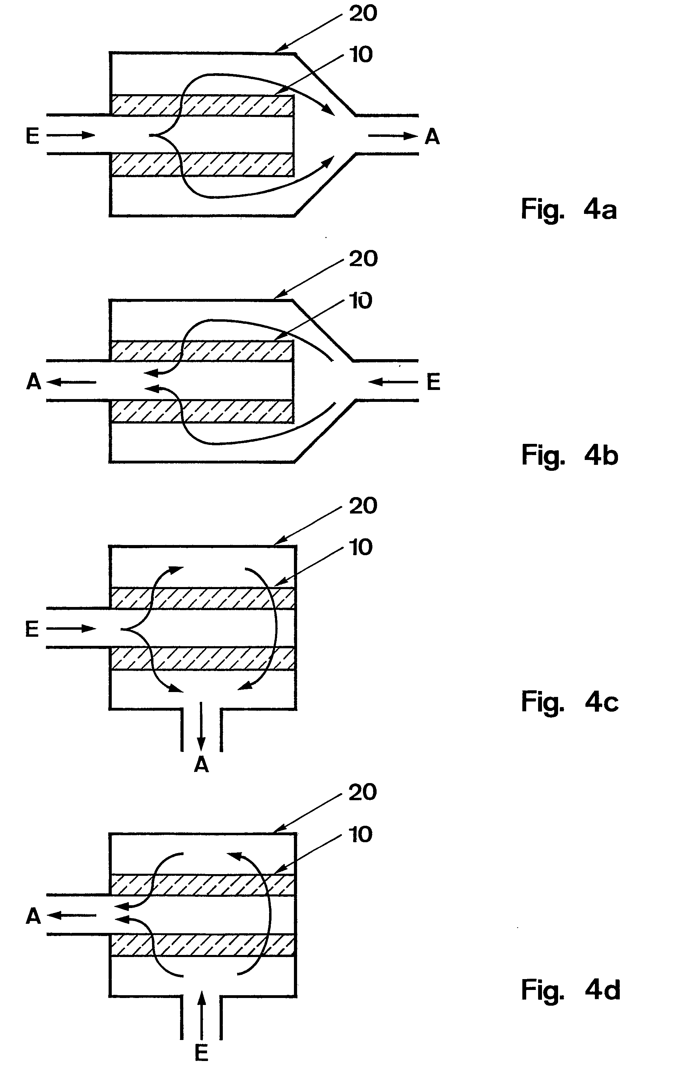

Mit Figur 4 werden beispielhaft verschiedene Konstruktionen von Filtertöpfen 20 unter Verwendung des erfindungsgemässen Filters 10 dargestellt. Die Pfeile verdeutlichen die Strömungsrichtung der Abgase vom jeweiligen Eingang E zum Ausgang A des Filtertopfes 20. Daraus ergibt sich, dass das Filter 10 sowohl von aussen als auch von innen angeströmt werden kann, wobei bei der Anströmung von aussen die Ausgestaltung der Oeffnungen 14 zur Beeinflussung der Strömung mit dem Ziel der gleichmässigen Beaufschlagung der einzel nen Schaumkeramikzylinderelemente 11 wesentliche Bedeutung zukommt.

Der Durchmesser des Filtertopfes kann vorteilhaft zwischen 120 und 500 mm bei einer Länge von 100 bis 1100 mm variieren, wobei für das Filter 10 zwei bis zehn Schaumkeramikzylinderelemente 11 Anwendung finden. Als Schaumkeramikmaterial werden vorzugsweise Oxyde von Al, Mg, und Si, insbesondere Cordierit oder Mullit, einzeln oder gemischt, oder Siliziumkarbid eingesetzt; die Porengrösse beträgt bevorzugt 30 bis 80 Poren je linearer Länge von 1 Zoll. Bei dem Schaumkeramikzylinderelement 11 kann der Innendurchmesser zwischen 30 bis 250 mm, vorzugsweise 80 bis 180 mm und der Aussendurchmesser zwischen 90 bis 400 mm, vorzugsweise 150 bis 300 mm, bei einer Länge zwischen 40 bis 300 mm, vorzugsweise 80 bis 200 mm, und einer Wandstärke von 20 bis 100 mm, vorzugsweise 30 bis 60 mm, variieren. Die Schwellmatten (Blähmatten) 18 sind 2 bis 15 mm, vorzugsweise 4 bis 8 mm, dick; als Scheibe wird vorteilhaft Blech mit entsprechenden Bohrungen oder Lochblech, insbesondere aus Edelstahl, verwendet, wobei die Abstützung auf der Innenwand 21 des Filtertopfs 20 durch entsprechende Aussparungen oder durch längliche Oeffnungen oder durch ein entsprechend ausgestaltetes Lochblech bewirkt wird.

Der erfindungsgemässe Filter eignet sich vorteilhaft für mit Dieselmotoren versehenen Strassen- und Schienenfahrzeugen, insbesondere für Lastkraftwagen und Busse zur Personenbeförderung.

**Patentansprüche**

1. Filter aus hohlzylinderförmiger offenporiger Schaumkeramik und einem Boden aus für Gase undurchlässigem Material zur Reinigung der Abgase von Dieselmotoren, bei dem die Abgase den filterwirksamen Teil im wesentlichen quer zur Zylinderachse durchströmen, als Einsatz in einem Filtertopf,
dadurch gekennzeichnet,
dass das Filter (10) aus mindestens zwei axial angeordneten Schaumkeramikzylinderelementen (11), zwischen denen sich eine Scheibe (12) aus für Gase undurchlässigem Material mit wenigstens etwa gleichem Durchmesser wie die Schaumkeramikzylinderelemente (11) und mit mindestens einer Oeffnung (13) im Schaumkeramikzylinderfreien Bereich befindet, besteht.

2. Filter (10) nach Anspruch 1, dadurch gekennzeichnet, dass die Scheibe (12) im Bereich der Schaumkeramikzylinderelemente (11) vor Packungen (18) flankiert ist.

3. Filter (10) nach Anspruch 1 oder 2, dadurch gekennzeichnet, dass die Scheibe (12) eine einzige zentrisch zur Zylinderachse der Schaumkeramikzylinderelemente (11) angeordnete Oeffnung (13) aufweist.

4. Filter (10) nach Anspruch 1 bis 3, dadurch gekennzeichnet, dass sich die Scheibe (12) mindestens teilweise auf der Innenwandung (21) des Filtertopfes (20) abstützt und in dem von den Schaumkeramikzylinderelementen (11) nicht eingeschlossenen peripheren Bereich (121) mindestens eine Oeffnung (14) aufweist.

5. Filter (10) nach einem der Ansprüche 1 bis 4, dadurch gekennzeichnet, dass sich der Boden (17) mindestens teilweise auf der Innenwandung (21) des Filtertopfes (20) abstützt und in dem von den benachbarten Schaumkeramikzylinderelement (11) nicht eingeschlossenen peripheren Bereich (171) mindestens eine Oeffnung (172) aufweist.

6. Filter (10) nach einem der Ansprüche 1 bis 5, dadurch gekennzeichnet, dass die Scheibe (12) im Bereich des inneren Durchmessers der Schaumkeramikzylinderelemente (11) quer zur Scheibenebene einen rohrförmigen Kragen (15) aufweist.

7. Filter (10) nach Anspruch 6, dadurch gekennzeichnet, dass der Kragen (15) eine einzige zentrisch zur Zylinderachse der Schaumkeramikzylinderelemente (11) angeordnete Oeffnung (13) der Scheibe (12) begrenzt.

8. Filter (10) nach einem der Ansprüche 1 bis 7, dadurch gekennzeichnet, dass der Boden (17) im Bereich des inneren Durchmessers des benachbarten Schaumkeramikzylinderelements (111) ein quer zu seiner Ebene angeordnetes Kragensegment (16) aufweist.

9. Filter (10) nach einem der Ansprüche 1 bis 8, dadurch gekennzeichnet, dass die Scheibe (12) eine metallische ist.

10. Filter (10) nach einem der Ansprüche 1 bis 9, dadurch gekennzeichnet, dass die Querschnittsflächen $F_i$ der Oeffnungen (13) der Scheiben (12) in Richtung des Abgasstroms beim Durchströmen der Schaumkeramikzylinder von innen nach aussen abnehmen.

11. Filter (10) nach einem der Ansprüche 1 bis 10, dadurch gekennzeichnet, dass die Querschnittsflächen $F_a$ der Oeffnungen (14) der Scheiben (12) in Richtung des Abgasstroms beim Durchströmen der Schaumkeramikzylinder von aussen nach innen abnehmen.

12. Filter (10) nach einem der Ansprüche 1 bis 11, dadurch gekennzeichnet, dass die Schaumkeramikzylinderelemente (11) mindestens teilweise unterschiedliche Porenzahlen je linearer Länge aufweisen.

13. Filter (10) nach Anspruch 12, dadurch gekennzeichnet, dass die Zahl der Poren je 1 Zoll linearer Länge zwischen 30 bis 80 liegt.

14. Filter (10) nach einem der Ansprüche 1 bis 9, dadurch gekennzeichnet, dass die Innendurchmesser der Schaumkeramikzylinder (11) bei gleichbleibenden Aussendurchmessern in Richtung des Abgasstroms abnehmen.

15. Filter (10) nach einem der Ansprüche 1 bis 9, dadurch gekennzeichnet, dass die Aussendurchmesser der Schaumkeramikzylinder (11) bei gleichbleibenden Innendurchmessern in Richtung des Abgasstroms zunehmem.

16. Verwendung des Filters (10) nach einem der Ansprüche 1 bis 15 für Dieselmotoren von Strassen- und Schienenfahrzeugen, insbesondere für Lastkraftwagen und Busse zur Personenbeförderung.

Fig. 1

Fig. 2

Fig. 3a

Fig. 3b

Fig. 4a

Fig. 4b

Fig. 4c

Fig. 4d

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-1 476 620 (UNIVERSAL OIL PRODUCTS CO.) <br> * Seite 7, Zeilen 10-58; Figur 1 * <br> --- | 1 | F 01 N 3/02 |
| A | DE-A-2 164 771 (AOI) <br> * Seite 9, Zeile 23 - Seite 10, Zeile 9; Seite 11, Zeilen 11-20; Figur 4 * <br> --- | 1 | |
| A | FR-A-2 199 344 (AOI) <br> --- | | |
| A | US-A-4 419 113 (SMITH) <br> --- | | |
| A | FR-A-2 109 753 (AOI) <br> ----- | | |
| | | | **RECHERCHIERTE SACHGEBIETE (Int. Cl.4)** <br><br> F 01 N |

**Der vorliegende Recherchenbericht wurde für alle Patentansprüche erstellt**

| Recherchenort | Abschlußdatum der Recherche | Prüfer |
|---|---|---|
| DEN HAAG | 05-01-1989 | ERNST J.L. |

EPO FORM 1503 03.82 (P0403)